Europäisches Patentamt

**European Patent Office**

Office européen des brevets

(19)

(11)    **EP 1 417 249 B1**

(12)    **EUROPÄISCHE PATENTSCHRIFT**

(45) Veröffentlichungstag und Bekanntmachung des
Hinweises auf die Patenterteilung:
**23.11.2005   Patentblatt 2005/47**

(21) Anmeldenummer: **02754941.9**

(22) Anmeldetag: **26.07.2002**

(51) Int Cl.⁷: **C08G 65/20**

(86) Internationale Anmeldenummer:
**PCT/EP2002/008340**

(87) Internationale Veröffentlichungsnummer:
**WO 2003/014189 (20.02.2003 Gazette 2003/08)**

(54) **VERBESSERTES VERFAHREN ZUR HERSTELLUNG VON POLYTETRAHYDROFURAN**

IMPROVED METHOD FOR PRODUCING POLYTETRAHYDROFURAN

PROCEDE AMELIORE DE PRODUCTION DE POLYTETRAHYDROFURANE

(84) Benannte Vertragsstaaten:
**AT BE BG CH CY CZ DE DK EE ES FI FR GB GR
IE IT LI LU MC NL PT SE SK TR**

(30) Priorität: **09.08.2001   DE 10139293**

(43) Veröffentlichungstag der Anmeldung:
**12.05.2004   Patentblatt 2004/20**

(73) Patentinhaber: **BASF Aktiengesellschaft
67056 Ludwigshafen (DE)**

(72) Erfinder:
• **STEINBRENNER, Ulrich
  67435 Neustadt (DE)**
• **HAUBNER, Martin
  69124 Eppelheim (DE)**
• **GERSTLAUER, Achim
  67065 Ludwigshafen (DE)**
• **DOMSCHKE, Thomas
  67346 Speyer (DE)**
• **SIGWART, Christoph
  69198 Schriesheim (DE)**
• **KÄSHAMMER, Stefan
  67105 Schifferstadt (DE)**

(56) Entgegenhaltungen:
**WO-A-96/23833          WO-A-99/36459**

**Beschreibung**

Die Erfindung betrifft ein Verfahren zur Herstellung von Polytetrahydrofuran oder Tetrahydrofuran-Copolymeren durch Polymerisation von Tetrahydrofuran an einem sauren, bevorzugt heterogenen Katalysator in Gegenwart mindestens eines Telogens und/oder Comonomers, wobei das Telogen und/oder Comonomer an mindestens zwei Zugabestellen in verschiedenen Segmenten der Polymerisationsapparatur zugegeben wird und mindestens 5 Gew.-% des Telogens und/oder Comonomers ab der zweiten Zugabestelle zugegeben wird.

Polytetrahydrofuran - im folgenden PTHF genannt - das auch als Polyoxybutylenglykol bekannt ist, wird in der Kunststoff- und Kunstfaserindustrie als vielseitiges Zwischenprodukt verwendet und dient unter anderem zur Herstellung von Polyurethan-, Polyester- und Polyamid-Elastomeren. Daneben ist es, wie auch einige seiner Derivate, in vielen Anwendungsfeldern ein wertvoller Hilfsstoff, so zum Beispiel als Dispergiermittel oder beim Entfärben (Deinken) von Altpapier.

PTHF wird technisch üblicherweise durch Polymerisation von Tetrahydrofuran - im folgenden kurz THF genannt - an geeigneten Katalysatoren hergestellt. Durch Zugabe geeigneter Reagenzien kann die Kettenlänge der Polymerketten gesteuert werden und so das mittlere Molekulargewicht auf den gewünschten Wert eingestellt werden. Die Steuerung erfolgt dabei durch Wahl von Art und Menge des Telogens. Solche Reagenzien werden Kettenabbruchreagenzien oder "Telogene" genannt. Durch die Wahl geeigneter Telogene können zusätzlich funktionelle Gruppen an ein oder beiden Enden der Polymerkette eingeführt werden.

So können zum Beispiel durch Verwendung von Carbonsäuren oder Carbonsäureanhydriden als Telogene die Mono- oder Diester des PTHFs hergestellt werden, die anschließend durch Verseifung oder Umesterung in PTHF umgewandelt werden müssen. Man bezeichnet diese Verfahren daher als zweistufige PTHF-Verfahren.

Andere Telogene wirken nicht nur als Kettenabbruchreagenzien, sondern werden auch in die wachsende Polymerisatkette des PTHFs eingebaut. Sie haben nicht nur die Funktion eines Telogens, sondern sind gleichzeitig ein Comonomer und können daher mit gleicher Berechtigung sowohl als Telogene wie auch als Comonomere bezeichnet werden können. Beispiele für solche Comonomere sind Telogene mit zwei Hydroxygruppen wie die Diole (Dialkohole). Dies können beispielsweise Ethylenglykol, Propylenglykol, Butylenglykol, 1,3-Propandiol, 1,4-Butandiol, 2-Butin-1,4-diol, 1,6-Hexandiol oder niedermolekulares PTHF sein. Weiterhin sind als Comonomere cyclische Ether wie 1,2-Alkylenoxide, zum Beispiel Ethylenoxid oder Propylenoxid, 2-Methyl-tetrahydrofuran oder 3-Methyltetrahydrofuran geeignet. Die Verwendung solcher Comonomere führt mit Ausnahme von Wasser, 1,4-Butandiol und niedermolekularem PTHF zur Herstellung von Tetrahydrofuran-Copolymeren - im folgenden THF-Copolymere genannt - und ermöglicht es auf dieser Weise, PTHF chemisch zu modifizieren.

Großtechnisch werden ganz überwiegend zweistufige Verfahren durchgeführt, bei denen Tetrahydrofuran z. B. in Gegenwart von Fluorsulfonsäure zu Polytetrahydrofuran-Estern polymerisiert und anschließend zu Polytetrahydrofuran hydrolysiert wird. Weiterhin wird Tetrahydrofuran z. B. mit Acetanhydrid in Gegenwart von sauren Katalysatoren zu Polytetrahydrofuran-Diacetat polymerisiert und anschließend z. B. mit Methanol zu Polytetrahydrofuran umgeestert. Nachteilig an derartigen Verfahren ist, daß zweistufig gearbeitet werden muss und dass Nebenprodukte wie z. B. Flußsäure und Methylacetat anfallen.

Die einstufige Synthese von PTHF wird durch THF-Polymerisation mit Wasser, 1,4-Butandiol oder niedermolekularem PTHF als Telogen an sauren Katalysatoren durchgeführt. Als Katalysatoren sind sowohl homogene im Reaktionssystem gelöste Systeme als auch heterogene, das heißt weitgehend ungelöste Systeme, bekannt.

Ausgehend von diesem Stand der Technik lag der vorliegenden Erfindung die Aufgabe zugrunde, ein wirtschaftliches Verfahren bereitzustellen, mit dem sich Polytetrahydrofuran und/oder Tetrahydrofuran-Copolymeren eines bestimmten mittleren Molekulargewichts herstellen lassen , wobei höhere Polymer-Ausbeuten und/oder Raum-Zeit-Ausbeuten erreicht werden.

Dementsprechend wurde ein Verfahren zur Herstellung von Polytetrahydrofuran (PTHF) und/oder Tetrahydrofuran-Copolymeren (THF-Copolymeren) durch die Polymerisation von Tetrahydrofuran an einem sauren heterogenen Katalysator in Gegenwart mindestens eines Telogens und/oder Comonomers gefunden, das dadurch gekennzeichnet ist, dass das Telogen und/oder Comonomer an mindestens zwei Zugabestellen in verschiedenen Segmenten eines durch geeignete Einbauten in Segmente unterteilten Polymerisationseinzelreaktors oder einer Kaskade aus mindesens zwei Polymerisationsreaktoren, bei der ein Segment ein Kessel- oder Rohrreaktor ist, zugegeben wird, wobei mindestens 5 Gew.-% des Telogens und/oder Comonomers ab der zweiten Zugabestelle zugegeben werden.

Das erfindungsgemäße Verfahren ermöglicht es, PTHF und THF-Copolymere eines bestimmten mittleren Molekulargewichts in hoher Raum-Zeit-Ausbeute und mit hohem Umsatz zu gewinnen, wobei das erfindungsgemäße Verfahren einstufig oder zweistufig durchgeführt werden kann. Die einstufige Synthese von PTHF ist jedoch bevorzugt.

Es hat sich überraschenderweise gezeigt, dass durch die kaskadierte Zugabe der Telogens und/oder Comonomers an mindestens zwei unterschiedlichen Zugabestellen in verschiedenen Segmenten der Polymerisationsapparatur Raum-Zeit-Ausbeute und Umsatz deutlich verbessert werden können. Die Anzahl der Zugabestelle kann neben zwei, drei, vier, fünf oder mehr betragen und ist von der verwendeten Polymerisationsapparatur, insbesondere deren Art und Kapazität, aber auch von verfahrenstechnischen und ökonomischen Randbedingungen abhängig. Bevorzugt werden in der Regel jedoch 2 bis 5 Zugabestellen verwendet.

Geeignete Polymerisationsapparaturen sind beispielsweise Kaskaden aus mindestens zwei Kessel- oder Rohrreaktoren, beispielsweise Rührkesselkaskaden, Kaskaden aus mindestens zwei gegebenenfalls im Umlauf betriebenen Festbettreaktoren sowie Kaskaden aus Schlaufenreaktoren. Ein Segment dieser Polymerisationsapparaturen, in dem eine Zugabestelle des Telogen und/oder Comonomers liegt, entspricht einem Kessel oder einem Rohr. Es ist jedoch nicht erforderlich, das jedes Segment der Polymerisationsapparatur, in dem sich eine Zugabestelle des Telogens und/oder Comonomers befindet, als Einzelaggregat wie zum Beispiel als Rührkessel ausgebildet ist. Vielmehr können auch konstruktive Ausgestaltungen eines Reaktors eingesetzt werden, die die Funktion einer Serienschaltung mehrerer Reaktorelemente erfüllen. Es kann daher auch ein Einzelreaktor, insbesondere ein Festbettreaktor, eingesetzt werden, der durch geeignete Einbauten, wie zum Beispiel Lochblenden oder Siebböden, in mindestens zwei, vorzugsweise 2 bis 5, Segmente unterteilt ist. Weiterhin ist es möglich Rührkolonnen mit mehr als einer Stufe und Strömungsrohre jeweils mit mindestens zwei Zugabestellen einzusetzen. Besonders bevorzugt sind Rührkesselkaskaden mit mindestens zwei Rührkesseln, bevorzugt bis 2 bis 5 Kesseln.

Das Telogen kann getrennt für sich oder gelöst im THF der Polymerisation zugeführt, wobei ein Telogengehalt von 1 bis 50 mol-%, bezogen auf Tetrahydrofuran, bevorzugt ist. Comonomere können ebenfalls gelöst in THF der Polymerisation zugeführt, wobei der Comonomerengehalt bis zu 30 mol-%, bevorzugt 20 mol-%, bezogen auf Tetrahydrofuran, betragen kann. Es ist jedoch bevorzugt dem Polymerisationsreaktor THF und das Telogen und/oder das Comonomer getrennt zuzuführen.

Da das Telogen den Abbruch der Polymerisation bewirkt, lässt sich über die eingesetzte Telogenmenge das mittlere Molekulargewicht des PTHF oder der THF-Copolymere steuern. Je mehr Telogen im Reaktionsgemisch enthalten ist, desto niedriger wird das mittlere Molekulargewicht des PTHF oder der betreffenden THF-Copolymere. Je nach Telogengehalt der Polymerisationsmischung können PTHF und THF-Copolymere mit mittleren Molekulargewichten von 650 bis 5000 Dalton, bevorzugt von 650 bis 3000 Dalton und insbesondere bevorzugt von 1000 bis 3000 Dalton hergestellt werden.

Die zugegebenen Telogen und/oder Comonomermenge kann an den vorhandenen, mindestens zwei Zugabestellen gleich oder verschieden sein. Mindestens 5 Gew.-% der Gesamttelogen und/oder Comonomermenge, bevorzugt 10 Gew.-%, besonders bevorzugt 15 Gew.-%, werden ab der zweiten Zugabestelle bzw. verteilt über die zweite bis n-te Zugabestelle zugegeben. Folglich beträgt die Zugabe zu Beginn der Polymerisationseinheit, d.h an der ersten Zugabestelle höchstens 95 Gew.-%, bevorzugt 90 Gew.-% und besonders bevorzugt 85 Gew.-%.

Die Steuerung der Zugabe des Telogens und/oder Comonomers kann so erfolgen, dass das mittlere Molekulargewicht des PTHF oder THF-Copolymers in jedem Segment der Polymerisationsapparatur, bei einer Rührkesselkaskade in jedem Kessel, durch die Menge an in diesem Segment zugebenem Telogen und/oder Comonomer so eingestellt wird, das dieses mittlere Molekulargewicht dem zu erzielenden mittleren Molekulargewicht des Endproduktes entspricht. Dabei wird empirisch Telogen und/oder Comonomer zugefahren, das mittlere Molekulargewicht einer Probe in der bekannten Art und Weise bestimmt, und die Telogen und/oder Comonomerzugabe abhängig vom Ergebnis dieser Bestimmung verändert.

Neben der Steuerung mit dem mittleren Molekulargewicht kann die Telogen und/oder Comonomermenge auch so gesteuert werden, dass jedes Segment bezogen auf die Katalysatormenge, die gleiche inkrementelle Produktivität leistet. Die Produktivität ("Prod") wird dabei, wie nachfolgend in dieser Anmeldung beschrieben, aus Belastung, Katalysatorinhalt und der Differenz zwischen Eindampfrückstand ("EDR") am Eingang und Ausgang eines Segments errechnet. Der Eindampfrückstand kann dabei über eine Kalibrierkurve mit ausreichender Genauigkeit aus intrinsischen Eigenschaften des Feedstrommes und des Exitstromes, bevorzugt aus dem Brechungindex, ermittelt werden. Unter Feedstrom wird dabei der dem Segment zugeführte Strom des Reaktionsgemischs und unter Exitstrom, der das Segment verlassende Strom des Reaktionsgemischs verstanden. Sowohl die Steuerung der Telogen und/oder Comonomerzugabe nach dem mittleren Molekulargewicht als auch nach der inkrememtellen Produktivität erfordern wiederholte Probenentnahmen, Bestimmungen und abhängig von deren Ergebnis Änderungen der Zugabe.

Werden die kontinuierlichen Steuerungen nach dem mittleren Molekulargewicht oder der inkrementellen Produktivität für zu aufwendig erachtet, ist es auch möglich, einmalig für jedes Segment nach dem mittleren Molekulargewicht oder der inkrementellen Produktivität einen Wert T für die Menge an Telogen und/oder Comonomer/ Segment der Polymerisationsapparatur für das jeweilige gewünschte Endprodukt zu bestimmen, und dann an jeder Zugabestelle von 25 bis 400% von T, bevorzugt 33 bis 300 %, besonders bevorzugt 50 bis 200%, zuzugeben. Dabei kann die Menge an zugegebenem Telogen und/oder Comonomer bei den verschiedenen Zugabestellen gleich oder verschieden sein.

Die apparative Steuerung der Telogen und/oder Comonomerzugabe in den verschiedenen Segmenten der Polymerisationsapparatur erfolgt in an sich bekannter Weise durch einzelne Pumpen, Ventile, Düsen, Blenden, Spalte, Membranen, Filterplatten oder Kapillarrohre.

Als Telogene und/oder Comonomere eignen sich im bevorzugten einstufigen erfindungsgemäßen Verfahren gesättigte oder ungesättigte, unverzweigte oder verzweigte alpha, omega-$C_2$- bis $C_{12}$-Diole, Wasser, Polytetrahydro-

furan eines Molekulargewichts von 200 bis 700 Dalton, cyclische Ether oder deren Gemische. Bevorzugt sind Wasser, Ethylenglykol, 1,3-Propandiol, 1,4-Butandiol, 1,5-Pentandiol, 1,6-Hexandiol, Polytetrahydrofuran eines Molekulargewichts von 200 bis 700 Dalton, 1,6-Hexandiol, 1,8-Octandiol, 1,10-Decandiol, 2-Butin-1,4-diol und Neopentylglykol oder deren Gemische, wobei Wasser, 1,4-Butandiol und/oder Polytetrahydrofuran eines Molekulargewichts von 200 bis 700 Dalton besonders bevorzugt sind.

Als Telogen-zur Herstellung von PTHF und THF Copolymeren nach dem zweistufigen Verfahren dienen Carbonsäureanhydride und/oder Carbonsäureanhydrid/Protonensäure-Gemische. Bevorzugte Carbonsäureanhydride, welcher von aliphatischen oder aromatischen Poly- oder Monocarbonsäuren abgeleite sind, die 2 bis 12, bevorzugt 1 bis 8 Kohlenstoffatome enthalten. Besonders Bevorzugt ist Essigsäureanhydrid. Die Protonensäuren sind bevorzugt organische und anorganische Säuren, die im Reaktionssytem löslich sind. Bevorzugte Carbonsäuren sind aliphatische oder aromatische Poly- und/oder Monocarbonsäuren, die 2 bis 12, bevorzugt 1 bis 8 Kohlenstoffatome enthalten. Beispiel für aliphatische Carbonsäuren sind Essigsäure, Milchsäure, Propionsäure, Valeriansäure, Capronsäure, Caprylsäure und Pelargonsäure. Beispiele für aromatische Carbonsäuren sind Phthalsäure und Naphthalincarbonsäure. Von diesen Carbonsäuren ist Essigsäure bevorzugt verwendet.

Als Comonomere sind cyclische Ether, die sich ringöffnend polymerisieren lassen, bevorzugt dreigliedrige, vier- und fünfgliedrige Ringe wie 1,2-Alkylenoxide, zum Beispiel Ethylenoxid oder Propylenoxid, Oxetan, substituierte Oxetane wie 3,3-Dimethyloxetan, die THF-Derivate 2-Methyl-tetrahydrofuran oder 3-Methyltetra-hydrofuran, geeignet, wobei 2-Methyl-tetrahydrofuran oder 3-Methyltetrahydrofuran besonders bevorzugt sind.

Als Polymerisationskatalysatoren können saure homogene und saure heterogene Katalysatoren verwendet werden. Unter den geeigneten homogenen Katalysatoren sind insbesondere Heteropolysäuren zu erwähnen.

Als Heteropolysäuren, welche im erfindungsgemäßen Verfahren als Katalysatoren dienen können, seien folgende Verbindungen beispielhaft genannt:

Dodecamolybdatophosphorsäure ($H_3PMo_{12}O_{40}$ * n $H_2O$),
Dodecamolybdatokieselsäure ($H_4SiMo_{12}O_{40}$ * n $H_2O$),
Dodecamolybdatocer(IV)säure ($H_8CeMo_{12}O_{42}$ * n $H_2O$),
Dodecamolybdatoarsen(V)säure ($H_3AsMo_{12}O_{42}$ * n $H_2O$),
Hexamolybdatochrom (III) säure ($H_3CrMo_6O_{24}H_6$ * n $H_2O$),
Hexamolybdatonickel(II)säure ($H_4NiMo_6O_{24}H_6$ * 5 $H_2O$),
Hexamolybdatojodsäure ($H_5JMo_6O_{24}$ * n $H_2O$),
Octadecamolybdatodiphosphorsäure ($H_6P_2Mo_{18}O_{62}$ * 11 $H_2O$),
Octadecamolybdatodiarsen(V)säure ($H_6As_2Mo_{18}O_{62}$ * 25 $H_2O$),
Nonamolybdatomangan(IV)säure ($H_6MnMo_9O_{32}$ * n $H_2O$),
Undecamolybdatovanadatophosphorsäure ($H_4PMo_{11}VO_{40}$ * n $H_2O$),
Decamolybdatodivanadatophosphorsäure ($H_5PMo_{10}V_2O_{40}$ * n $H_2O$),
Dodecavanadatophosphorsäure ($H_7PV_{12}O_{36}$ * n $H_2O$),
Dodecawolframatokieselsäure ($H_4SiW_{12}O_{40}$ * 7 $H_2O$),
Dodecawolframatoborsäure ($H_5BW_{12}O_{40}$ * n $H_2O$),
Octadecawolframatodiphosphorsäure ($H_6P_2W_{18}O_{62}$ * 14 $H_2O$),
Octadecawolframatodiarsen(V)säure ($H_6AS_2W_{18}O_{62}$ * 14 $H_2O$),
Hexamolybdatohexawolframatophosphorsäure ($H_3PMo_6W_6O_{40}$ * n $H_2O$).

Selbstverständlich können auch Mischungen von Heteropolysäuren eingesetzt werden. Vorzugsweise werden im erfindungsgemäßen Verfahren aufgrund ihrer einfachen Zugänglichkeit Dodecawolframatophosphorsäure, Do-decamolybdatophosphorsäure, Nonamolybdatophosphorsäure, Dodecamolybdatokieselsäure und Dodecawolframa-tokieselsäure eingesetzt.

Bevorzugt werden die freien Heteropolysäuren erfindungsgemäß als Katalysatoren angewandt, es ist aber auch möglich, deren Salze, insbesondere deren Alkalimetall- und Erdalkalimetallsalze als Katalysatoren zu benutzen. Die Heteropolysäuren und deren Salze sind bekannte Verbindungen und können nach bekannten Verfahren, beispielsweise nach den Methoden von Brauer (Herausgeber): Handbuch der Präparativen Anorganischen Chemie, Band III, Enke, Stuttgart, 1981 oder nach den Verfahren von Top. Curr. Chem. 76, 1 (1978), hergestellt werden.

Die so hergestellten Heteropolysäuren liegen im allgemeinen in hydratisierter Form vor. Vorzugsweise werden sie vor ihrer Verwendung im erfindungsgemäßen Verfahren vom darin enthaltenen koordinativ gebundenen Wasser befreit. Diese Dehydratisierung kann vorteilhaft thermisch, beispielsweise nach dem Verfahren von Makromol. Chem. 190, 929 (1989), durchgeführt werden.

Als Polymerisationskatalysatoren werden bevorzugt saure heterogene Katalysatoren verwendet, die Säure-zentren der Säurestärke $H_0 < +2$ in einer Konzentration von mindestens 0,005 mmol/g Katalysator, besonders bevorzugt einer Säurestärke Ho< +1,5 in einer Konzentration von mindestens 0,01 mmol/g Katalysator, aufweisen.

Als heterogene Polymerisationskatalysatoren können in dem erfindungsgemäßen Verfahren geträgerte Heteropolysäuren, Cäsiumsalze der Heteropolysäuren, sulfat- oder phosphatdotierte Metalloxide der Gruppen IV A, VII A und VIII A des Periodensystems der Elemente, gewünschtenfalls durch Säurebehandlung aktivierte Schichtsilikate oder Zeolithe, alpha-Fluorsulfonsäuren enthaltende Polymere, saure gemischte Metalloxide der Gruppen IIIB, IVB, IIIA bis VIIIA des Periodensystems der Elemente, Trägerkatalysatoren aus einem oxidischen Trägermaterial, die eine katalytisch aktive Menge einer Wolfram- oder Molybdänverbindung oder Gemische solcher Verbindungen enthalten, verwendet werden, wobei Trägerkatalysatoren aus einem oxidischen Trägermaterial, die eine katalytisch aktive Menge einer Wolfram- oder Molybdänverbindung oder Gemische solcher Verbindungen enthalten, bevorzugt sind.

Geeignete geträgerte Heteropolysäuren sind beispielsweise Heteropolysäuren der allgemeinen Formeln $H_3PM_{12}O_{40}$ (Dodecamolybdatophoshorsäure, Dodecamolybdatophosphorsäure) und $H_3SiM_{12}O_{40}$ (Dodecamolybdatokieselsäure, Dodecamolybdatokieselsäure), in denen M jeweils Molybdän und/oder Wolfram bedeutet, die auf üblichen Trägermaterialien wie Aktivkohle, Siliciumdioxid, auf mesoporösen Siliciumoxiden gegraftete Sulfonsäuren wie man sie durch Behandlung der mesoporösen Siliciumoxid-Träger mit Mercaptoalkyltrialkoxysilanen und nachfolgender Oxydation, beispielsweise mit Wasserstoffperoxid oder Salpetersäure, erhält, Tonen, Polymeren oder Zeolithen wie MCM-41 geträgert sind. Derartige geträgerte Heteropolysäuren sind beispielsweise bei T. Okuhara, N. Miszuno und M. Misono, Catalytic Chemistry of Heteropoly Compound, Adv. Catal. 41, 1996, Acad. Press, Seiten 113 ff beschrieben. Auch die in dieser Literaturstelle beschriebenen sauren Cäsiumsalze der Heteropolysäuren wie zum Beispiel $Cs_{2,5}H_{0,5}PW_{12}O_{40}$ sind für die Verwendung als Polymerisationkatalysator in dem erfindungsgemäßen Verfahren geeignet.

Als sulfatdotierte Metalloxide der Gruppen IV A, VII A und VIII A kommen bevorzugt sulfatdotiertes Zirkoniumdioxid und Titandioxid, sulfatdotierte gemischte Oxide des Eisen (III) und des Zirkondioxids sowie sulfat- oder phosphatdotierte gemischte Oxide des Mangans und des Zirkoniumdioxids. Die Herstellung dieser sulfatdotierte Metalloxide erfogt nach an sich bekannten Verfahren. So kann sulfatdotiertes Zirkoniumdioxid, das für das erfindungsgemäße Verfahren geeignet ist, beispielsweise nach dem in der US-A 5 149 862 beschriebenen Verfahren hergestellt werden.

Neben sulfatdotierten Metalloxiden können auch alpha-Fluorsulfonsäure enthaltende Polymere als Polymerisationskatalysator verwendet werden. Bevorzugt sind perfluorhaltige alpha-Fluorsulfonsäure enthaltende Polymere, die zum Beispiel unter der Bezeichnung Nafion® von der Firma E.I. du Pont de Nemours and Company und unter der Bezeichnung Amberlyst® 15 und Amberlyst® 36 von der Firma Rohm und Haas als Handelsprodukt vertrieben werden.

Weiterhin können saure gemischte Metalloxide der Gruppen III B, IV B, III A bis VIII A des Periodensystems der Elemente, insbesondere $WO_3$-$TiO_2$, $WO_3$-$ZrO_2$, $WO_3$-$SnO_2$, $MoO_3$-$TiO_2$, $MoO_3$-$ZrO_2$, $MoO_3$-$SnO_2$, $V_2O_5$ -$WO_3$-$TiO_2$, $TiO_2$-$SiO_2$, $ZrO_2$-$SiO_2$, $Al_2O_3$-$SiO_2$ wie sie bei K. Tanabe, M. Misono, Y. Ono und H. Hattori, New Solid acids and Bases, Stud. Surf. Sciences and Catal. 51, insbesondere Seiten 108 - 128 und 199 - 210, Elsevier 1989, beschrieben sind, in dem erfindungsgemäßen Verfahren eingesetzt werden.

Geeignete Trägerkatalysatoren aus einem oxidischen Trägermaterial, die sauerstoffhaltige Molybdän- oder WolframVerbindungen oder Gemische solcher Verbindungen als katalytisch aktive Verbindungen enthalten und die weiterhin gewünschtenfalls zusätzlich mit Sulfat- oder Phosphatgruppen dotiert sein können, sind in der DE-A 44 33 606, auf die hier ausdrücklich Bezug genommen wird, beschrieben. Diese Katalysatoren können wie in der DE 19641481 auf die hier ausdrücklich Bezug genommen wird, mit einem Reduktionsmittel, bevorzugt mit Wasserstoff, vorbehandelt werden.

Weiterhin sind die in der deutschen Patentanmeldung DE 19649803, auf die hier ebenfalls ausdrücklich Bezug genommen wird, beschriebenen Trägerkatalysatoren geeignet, die als Aktivmasse eine katalytisch aktive Menge mindestens einer sauerstoffhaltigen Molybdän- und/oder Wolframverbindung enthalten und die nach Aufbereitung der Vorläuferverbindungen der Aktivmasse auf den Trägermaterialvorläufer bei Temperaturen von 500°C bis 1000°C kalziniert worden sind, die einen Promotor enthalten, welcher mindestens ein Element oder eine Verbindung eines Elements der 2., 3. einschließlich der Lanthaniden, 5., 6., 7., 8. oder 14. Gruppe des Periodensystems der Elemente umfaßt. Diese Katalysatoren enthalten im allgemeinen 0,01 bis 30 Gew.-%, vorzugsweise 0,05 bis 20 Gew.-% und besonders bevorzugt 0,1 bis 15 Gew.-% an Promotor, berechnet als Summe seiner Bestandteile in Form ihrer Elemente und bezogen auf das Gesamtgewicht des Katalysators.

Die aus der DE-A 44 33 606 und der DE 196 49 803 bekannten erfindungsgemäß anwendbaren Katalysatoren enthalten im allgemeinen 0,1 bis 50 Gew.-% der katalytisch aktiven, sauerstoffhaltigen Verbindungen des Molybdäns oder Wolframs oder der Gemische der katalytisch aktiven, sauerstoffhaltigen Verbindungen dieser Metalle, jeweils bezogen auf das Gesamtgewicht des Katalysators und da die chemische Struktur der katalytisch aktiven, sauerstoffhaltigen Verbindungen des Molybdäns und/oder Wolframs bislang nicht genau bekannt ist, jeweils berechnet als $MoO_3$ bzw. $WO_3$.

In der deutschen Anmeldung DE 10032267.0 "Katalysator und Verfahren zur Herstellung von Polytetrahydrofuran" sind erfindungsgemäß anwendbare Katalysatoren, die auf einem oxidischen Träger mindestens eine katalytisch aktive, sauerstoffhaltige Molybdän- und/oder Wolframverbindung enthalten beschrieben, bei denen der Gehalt an Molybdän und/oder Wolfram, bezogen auf den bei 400°C unter Stickstoff getrockneten Katalysator, x μmol (Wolfram

und/oder Molybdän)/m$^2$ Oberfläche mit 10,1 < x < 20,9 beträgt. Durch die gezielte Einstellung des Verhältnisses des Wolfram und/oder Molybdän-Gehaltes zur BET-Oberfläche konnte die Katalysatoraktivität deutlich gesteigert werden.

Weiterhin sind in der deutschen Anmeldung DE 10032268.9 "Verbesserter Katalysator und Verfahren zur Herstellung von Polytetrahydrofuran" mit gleichem Anmeldetag erfindungsgemäß anwendbare Katalysatoren, die auf einem oxidischen Träger mindestens eine katalytisch aktive, sauerstoffhaltige Molybdän- und/oder Wolframverbindung enthalten und die nach Aufbringen der Vorläuferverbindungen der katalytisch aktiven Verbindungen auf das Trägermaterial oder einen Trägermaterial-Vorläufer bei Temperaturen von 400°C bis 900°C kalziniert worden sind, beschrieben, welche eine Porosität des Katalysators mit Transportporen jeweils eines Durchmessers von < 25 nm und ein Volumen dieser Transportporen von mindestens 50 mm$^3$/g aufweisen.

Die in diesen beiden Anmeldungen beschriebenen Katalysatoren enthalten 0,1 bis 70 Gew.-%, vorzugsweise 5 bis 40 Gew.-% und besonders bevorzugt 10 bis 35 Gew.-% der katalytisch aktiven sauerstoffhaltigen Molybdän- und/ oder Wolframverbindung(en), berechnet als $MoO_3$ und/oder $WO_3$ und bezogen auf das Gesamtgewicht des Katalysators.

Geeignete oxidische Träger für die sauerstoffhaltigen Molybdän- oder Wolframverbindungen oder Gemische solcher Verbindungen als katalytisch aktive Verbindungen enthaltenden Katalysatoren sind z.B. Zirkoniumdioxid, Titandioxid, Hafniumoxid, Yttriumoxid, Eisen(III)oxid, Aluminiumoxid, Zinn(IV)oxid, Siliziumdioxid, Zinkoxid oder Gemische dieser Oxide. Besonders bevorzugt sind Zirkoniumdioxid, Titandioxid und/oder Siliciumdioxid, insbesondere bevorzugt ist Titandioxid.

Neben den vorstehend genannten Polymerisationskatalysatoren können in dem erfindungsgemäßen Verfahren gewünschtenfalls durch Säurebehandlung aktivierte Schichtsilikate oder Zeolithe als heterogener Katalysator eingesetzt werden. Als Schichtsilikate werden bevorzugt solche der Montmorillonit-Saponit-, Kaolin-Serpentin- oder Palygorskit-Sepiolith-Gruppe, besonders bevorzugt Montmorillonit, Hectorit, Kaolin, Attapulgit, Beiddellit oder Sepiolith, wie sie beispielsweise in Klockmanns Lehrbuch der Mineralogie, 16. Auflage, F. Euke Verlag 1978, Seiten 739 - 765 beschrieben werden, verwendet.

In dem erfindungsgemäßen Verfahren können zum Beispiel solche Montmorillonite eingesetzt werden, wie sie unter der Bezeichnung Tonsil®, Terrana® oder Granosil® oder als Katalysatoren der Typen Tonsil® K 10, KSF-O, KO oder KS bei der Firma Süd-Chemie AG, München, erhältlich sind. Für die Verwendung in dem erfindungsgemäßen Verfahren geeignete Attapulgite werden beispielsweise von der Firma Engelhard Corporation, Iselin, USA, unter den Handelsbezeichnungen Attasorb® RVM und Attasorb® LVM vertrieben.

Als Zeolithe wird eine Klasse von Aluminiumhydrosilikaten bezeichnet, die aufgrund ihrer besonderen chemischen Struktur im Kristall dreidimensionale Netzwerke mit definierten Poren und Kanälen ausbildet. Für das erfindungsgemäße Verfahren sind natürliche oder synthetische Zeolithe geeignet, wobei Zeolithe mit einem $SiO_2$-$Al_2O_3$-Molverhältnis von 4:1 bis 100:1 bevorzugt, mit einem $SiO_2$-$Al_2O_3$-Molverhältnis 6:1 bis 90:1 besonders bevorzugt und mit einem $SiO_2$-$Al_2O_3$-Molverhältnis 10:1 bis 80:1 insbesondere bevorzugt sind. Die Primärkristallite dieser Zeolithe haben bevorzugt eine Teilchengröße von bis zu 0,5 mm, vorzugsweise von 0,1 mm und besonders bevorzugt 0,05 mm.

Die in dem erfindungsgemäßen Verfahren einsetzbaren Zeolithe werden in der sogenannten H-Form eingesetzt. Diese ist dadurch gekennzeichnet, dass im Zeolith azide OH-Gruppen vorliegen. Falls die Zeolithe nicht schon bei ihrer Herstellung in H-Form anfallen, können sie leicht durch Säurebehandlung mit zum Beispiel Mineralsäuren wie Salzsäure, Schwefelsäure, Phosphorsäure oder durch thermische Behandlung geeigneter Vorläufer-Zeolithe, die zum Beispiel Amanoniumionen enthalten, beispielsweise durch Erhitzen auf Temperaturen von 450 bis 600°C, vorzugsweise 500 bis 550°C, in die katalytisch aktive H-Form umgewandelt werden. Beispiele für erfindungsgemäß verwendbare Zeolithe sind beispielsweise Zeolithe vom Mordenit-Typ, beta-Zeolithe, Zeolithe beispielsweise vom Typ MCM-22 oder Faujsait.

Die erfindungsgemäß anwendbaren heterogenen Katalysatoren können in Form von Pulver, beispielsweise bei der Durchführung des Verfahrens in Suspensionsfahrweise, oder zweckmäßigerweise als Formkörper, z.B. in Form von Zylindern, Kugeln, Ringen, Spiralen oder Splitt, insbesondere bei einer Festbettanordnung des Katalysators, im erfindungsgemäßen Verfahren eingesetzt werden.

Als Monomer kann grundsätzlich jedes beliebige THF, bevorzugt THF, das weniger als 100 ppm an ungesättigten Verbindungen und molekularem Sauerstoff enthält, eingesetzt werden. Bevorzugt wird handelsübliches THF durch Säurebehandlung, wie beispielweise in der EP-A 003 112 beschrieben, oder destillativ vorgereinigtes THF eingesetzt.

Die Polymerisation wird im allgemeinen bei Temperaturen von 0 bis 80°C, bevorzugt bei 25 bis 75 °C, und besonders bevorzugt bei 40 bis 70°C durchgeführt. Der angewandte Druck ist in der Regel für das Ergebnis der Polymerisation unkritisch, weshalb im allgemeinen bei Atmosphärendruck oder unter dem Eigendruck des Polymerisationssystems gearbeitet wird.

Zur Vermeidung der Bildung von Etherperoxiden wird die Polymerisation vorteilhaft unter einer Inertgasatmosphäre vollzogen. Als Inertgase können z.B. Stickstoff, Kohlendioxid oder die Edelgase dienen, bevorzugt wird Stickstoff verwendet.

Die Polymerisation kann auch in Gegenwart von Wasserstoff bei Wasserstoffdrucken von 0,1 bis 10 bar durchgeführt werden.

Das erfindungsgemäße Verfahren wird bevorzugt kontinuierlich betrieben. Es ist jedoch auch möglich das erfindungsgemäßen Verfahrens diskontinuierlich zu betreiben.

Dabei kann die Umsetzung in herkömmlichen für kontinuierliche Verfahren geeigneten Reaktoren oder Reaktoranordnungen in Suspensions- oder Festbettfahrweise, beispielsweise in Schlaufenreaktoren oder Rührreaktoren bei Suspensionsfahrweise oder bei Festbettfahrweise in Rohrreaktoren oder Festbettreaktoren ausgeführt werden.

Zum Betrieb des kontinuierlichen Polymerisationsapparatur oder kann der Katalysator gewünschtenfalls nach dem Einfüllen in den oder die Reaktor(en) vorbehandelt werden. Als Vorbehandlung des Katalysators kommen beispielweise das Trocknen mit auf 80-200°C, bevorzugt auf 100 bis 150°C, erwärmten Gasen wie zum Beispiel Luft oder Stickstoff oder die Vorbehandlung mit einem Reduktionsmittel, wie dies in der DE 196 41 481 für die erfindungsgemäß bevorzugten Trägerkatalysatoren, welche als Aktivmasse eine katalytisch aktive Menge mindestens einer sauerstoffhaltigen Molybdän- und/oder Wolframverbindung enthalten, beschrieben ist, in Frage. Selbstverständlich kann der Katalysator jedoch auch ohne Vorbehandlung eingesetzt werden.

In Festbettfahrweise kann die Polymerisationsapparatur in Sumpffahrweise, d.h. das Reaktionsgemisch wird von unten nach oben geführt, oder in Rieselfahrweise, d.h. das Reaktionsgemisch wird von oben nach unten durch den Reaktor geführt, betrieben werden. Das Eduktgemisch (Feed) aus THF und einem Teil des Telogen und/oder Comonomers wird der ersten Zugabestelle der Polymerisationsaparatur kontinuierlich zugeführt. An der zweiten oder den weiteren Zugabestellen werden weitere Teilmengen des Telogens und/oder Comonomers zugeführt. Die Katalysatorbelastung beträgt 0,05 bis 0,8 kg THF/(1·h), bevorzugt 0,1 bis 0,6 kg THF/(1·h) und besonders bevorzugt 0,15 bis 0,5 kg THF/(1·h), beträgt.

Weiterhin kann der Polymerisationsreaktor im geraden Durchgang, das heißt ohne Produktrückführung, oder im Umlauf, das heißt das den Reaktor verlassende Polymerisationsgemisch wird dabei im Kreislauf betrieben werden. Bei der Umlauffahrweise beträgt das Verhältnis von Umlauf zu Zulauf kleiner oder gleich 100 : 1, bevorzugt kleiner 50 : 1 und besonders bevorzugt kleiner 40 : 1.

Beispiele

Die Erfindung wird im weiteren anhand von Beispielen erläutert.

Molekulargewichtsbestimmung

Das mittlere Molekulargewicht $M_n$, in Form des Zahlenmittel des Molekulargewichtes, definiert als die Masse aller PTHF-Moleküle dividiert durch ihre Menge in Mol, wird durch die Bestimmung der Hydroxylzahl in Polytetrahydrofuran bestimmt. Unter der Hydroxylzahl wird diejenige Menge an Kaliumhydroxid in mg verstanden, die der bei der Acetylierung von 1 g Substanz gebundenen Menge Essigsäure äquivalent ist. Die Hydroxylzahl wird bestimmt durch die Veresterung der vorhandenen Hydroxylgruppen mit einem Überschuß an Essigsäureanhydrid.

$$H-[O(CH_2)_4]_n-OH + (CH_3CO)_2O \rightarrow CH3\ CO-[O(CH_2)_4]_n-O-COCH_3 + H_2O$$

Nach der Umsetzung wird das überschüssige Essigsäureanhydrid gemäß folgender Reaktionsgleichung mit Wasser hydrolysiert

$$(CH_3CO)_2O + H_2O \rightarrow 2\ CH_3COOH$$

und als Essigsäure mit Natronlauge zurücktitriert.

Beispiel 1: Herstellung des Katalysators

Titandioxid (VKR 611 der Firma Sachtleben) wurde bei 500 °C im kotinuierlichen Drehrohr kalziniert, so das ein Material mit einer BET-Oberfläche von 135 $m^2$/g und einem Massenverlust nach dem Glühen von 8,1 Gew.-% resultierte. 73,81 kg dieses Titandioxids wurden mit 29,64 kg Ammoniumparawolframat, 21,73 kg Oxalsäure-Dihydrat und 17,7 kg Wasser 1 Stunde gekollert, in Strängen von 3 mm Durchmesser extrudiert und 3 h bei 90°C getrocknet. Anschliesend wurde 5 h auf bei 400°C und 40 min bei 630 °C kalziniert.

Kontinuierliche THF-Polymerisation

Vergleichsbeispiele V 1 bis 4

Ein druckloser 3300 ml Glasreaktor mit Heizmantel und externem Rührer, bei dem der Bereich des Rührers mittels eines Drahtnetzes vom Rest des Reaktors getrennt war, wurden mit 2410 g Katalysator gemäß Beispiel 1 gefüllt. Katalysator und Reaktor wurden anschließend bei 200 °C im $N_2$-Strom getrocknet. Nach dem Einfüllen des Katalysators wurde der Reaktor auf 60°C abgekühlt und mit einem Gemisch aus 1,4-Butandiol in THF (Tetrahydrofuran) angefahren. Täglich wurde am Reaktorausgang Proben entnommen und durch Erhitzen im Vakuum bei 0,3 mbar und 120°C von nicht umgesetztem THF und 1,4-Butandiol befreit.
Der so erhaltene Eindampfrückstand entspricht näherungsweise dem THF-Umsatz - und ist definiert als

$$EDR = m(Destillationsrückstand) / m(Probe).$$

Die Produktivität wiederum ist definiert

$$Prod = EDR * m(Feed) / t / m(Katalysator)$$

wobei m jeweils für die Menge in g, t für die Zeit in Stunden steht und Feed, das in den Reaktor eingefahrene Reaktionsgemisch bedeutet.
Für das so erhaltene PTHF wurde dann das Zahlenmittel des Molekulkargewichts gemessen. Anschließend wurden die Butandioldosierungen variiert bis an drei aufeinanderfolgenden Tagen das Zahlenmittel des PTHF-Molgewichtes 2000 ± 50 betrug. Dann wurden der Eindampfrückstand und das PTHF-Molekulargewicht bestimmt. Das Ergebnis ist in Tabelle 1 angegebenen.

Vergleichsbeispiel V 5

Eine Kaskade aus vier der unter den Vergleichsbeispielen 1 bis 4 beschriebenen drucklosen Glasreaktoren wurden pro Reaktor mit 602,5 g Katalysators gemäß Beispiel 1 befüllt und anschließend bei 200 °C im $N_2$-Strom getrocknet. Die Reaktoren wurden als Rührkesselkaskade betrieben. Nach dem Befüllen des Katalysators wurden die Reaktoren auf 60°C abgekühlt und mit einem Gemisch aus 1,4-Butandiol in THF (Tetrahydrofuran) angefahren. Das Telogen 1,4-Butandiol wurde zu 100% vor dem ersten Reaktor zugegeben. Täglich wurden am Reaktorausgang des letzten Reaktors der Kaskade Proben entnommen und durch Erhitzen im Vakuum bei 0,3 mbar und 120°C von nicht umgesetztem THF und 1,4-Butandiol befreit.
Für das erhaltene PTHF wurde dann das Zahlenmittel des Molekulkargewichts gemessen und der Eindampfrückstand nach dem vierten Reaktor bestimmt. Das Zahlenmittel des PTHF-Molekulargewichtes nach dem letzten Reaktor betrug 1989 g/mol Das Ergebnis und die Gesamtbelastungen sind Tabelle 1 zu entnehmen.

Tabelle 1:

| Vergleichsbeispiele V 1 bis V 5 | | | | | |
|---|---|---|---|---|---|
| Vergleichsbeispiele | Belastung THF (g/h) | Belastung 1,4-BDO[1] (g/h) | $M_n$[2] (g/mol) | EDR[3] (%) | Prod[4] (g/kg/h) |
| V 1 | 1000 | 3,4 | 1981 | 4,6 | 19,2 |
| V 2 | 498 | 2,31 | 2034 | 6,8 | 14,2 |
| V 3 | 332 | 1,82 | 2021 | 8,3 | 11,5 |
| V 4 | 249 | 1,53 | 1993 | 9,6 | 10,0 |
| V 5 | 499 | 2,09 | 1989 | 6,7 | 14,0 |

1 = 1,4-Butandiol

2 = Zahlenmittel des Molekulargewichts

3 = Eindampfrückstand

4 = Produktivität

Beispiele 2 bis 7

Eine Kaskade aus vier der unter den Vergleichsbeispielen 1 bis 4 beschriebenen drucklosen Glasreaktoren wurden pro Reaktor mit 602,5 g Katalysators gemäß Beispiel 1 befüllt und anschließend bei 200 °C im $N_2$-Strom getrocknet. Die Reaktoren wurden als Rührkesselkaskade betrieben. Nach dem Befüllen des Katalysators wurden die Reaktoren auf 60°C abgekühlt und mit einem Gemisch aus 1,4-Butandiol in THF (Tetrahydrofuran) angefahren. Vor jeder Reaktoreinheit der Rührkesselkaskade wurde mit Hilfe einer Dosierpumpe die angegebenen Teilmengen des 1,4-Butandiol zugefahren. Die Menge wurde jeweils mit einer Analysenwaage bestimmt. Täglich wurden am Reaktorausgang des letzten Reaktors der Kaskade Proben entnommen und durch Erhitzen im Vakuum bei 0,3 mbar und 120°C von nicht umgesetztem THF und 1,4-Butandiol befreit.

Für das so erhaltene PTHF wurde dann das Zahlenmittel des Molekulargewichts gemessen. Anschliessend wurden die Butandioldosierungen variiert bis an drei aufeinanderfolgenden Tagen das Zahlenmittel des PTHF-Molgewichtes nach dem letzten Reaktor 2000 ± 50 betrug. Dann wurden der Eindampfrückstand und das PTHF-Molekulargewicht nach jedem Reaktor bestimmt. Das Ergebnis der einzelnen Reaktoren ist nach jedem Beispiel angegeben. Das Ergebnis für den vierten Reaktor und die Gesamtbelastungen sind Tabelle 3 zu entnehmen.

Beispiel 2

In Beispiel 2 wurden 25 Gew.% der Gesamtmenge an 1,4-Butandiol vor dem ersten Reaktor zugegeben. In Tabelle 2 sind die Gesamtbelastungen sowie das Zahlenmittel des Molekulargewichts, der Eindampfrückstand EDR des letzten Reaktor und die Produktivität angegeben.

| Reaktor Nr. | EDR[1] (%) | $M_n$[2] (g/mol) |
|---|---|---|
| 1 | 5.2 | 3384 |
| 2 | 6.6 | 2631 |
| 3 | 7.1 | 2259 |
| 4 | 7.6 | 2026 |

1 = Eindampfrückstand

2 = Zahlenmittel des Molekulargewichts

Beispiel 3

In der in Beispiel 3 betriebenen Rührkesselkaskade wurde 1,4-Butandiolmenge in vier Teilmengen zugegeben und zwar 40 Gew.-% vor dem ersten Reaktor, 30 Gew.-% vor dem zweiten Reaktor, 20 Gew.-% vor dem dritten Reaktor und 10 Gew.-% vor dem vierten Reaktor. In Tabelle 2 sind die Gesamtbelastungen sowie sowie das Zahlenmittel des Molekulargewichts, der Eindampfrückstand EDR des letzten Reaktor und die Produktivität angegeben.

| Reaktor | EDR[1] (%) | $M_n$[2] (g/mol) |
|---|---|---|
| 1 | 3.8 | 2521 |
| 2 | 5.5 | 2187 |
| 3 | 6.7 | 2053 |
| 4 | 7.9 | 2012 |

1 = Eindampfrückstand

2 = Zahlenmittel des Molekulargewichts

Beispiele 4, 5, 6 und 7

In den in den Beispielen 4, 5, 6 und 7 betriebenen Rührkesselkaskaden wurde 1,4-Butandiolmenge in vier Teilmengen bei unterschiedlichen Gesamtbelastungen zugegeben und zwar 50 Gew.-% vor dem ersten Reaktor, 25 Gew.-% vor dem zweiten Reaktor, 15 Gew.-% vor dem dritten Reaktor und 10 Gew.-% vor dem vierten Reaktor.

| Beispiel | Reaktor Nr. | EDR (%) | $M_n$ (g/mol) |
|---|---|---|---|
| 4 | 1 | 2.6 | 1805 |
| | 2 | 4.4 | 1811 |
| | 3 | 6.1 | 1892 |
| | 4 | 7.9 | 2007 |
| 5 | 1 | 1.5 | 1729 |
| | 2 | 2.7 | 1758 |
| | 3 | 3.9 | 1869 |
| | 4 | 5.2 | 2011 |
| 6 | 1 | 3.5 | 1874 |
| | 2 | 5.8 | 1859 |
| | 3 | 7.8 | 1907 |
| | 4 | 9.9 | 2005 |
| 7 | 1 | 4.2 | 1873 |
| | 2 | 6.9 | 1871 |
| | 3 | 9.3 | 1941 |
| | 4 | 11 | 2006 |

In Tabelle 2 sind die Gesamtbelastungen, das Zahlenmittel des Molekulargewichts, der Eindampfrückstand EDR des letzten Reaktor und die Produktivität angegeben.

Tabelle 2:

| Beispiele 2 bis 7 | | | | | |
|---|---|---|---|---|---|
| Beispiele | Gesamtbelastung THF (g/h) | Gesamtbelastung 1,4-BDO[1] (g/h) | $M_n$[2] (g/mol) | EDR[3] (%) | Prod[4] (g/kg/h) |
| 2 | 496 | 3,92 | 2026 | 7,6 | 15,8 |
| 3 | 498 | 2,78 | 2012 | 7,9 | 16,4 |
| 4 | 498 | 2,53 | 2007 | 7,9 | 16,4 |
| 5 | 1000 | 3,64 | 2011 | 5,2 | 21,7 |
| 6 | 332 | 2,03 | 2005 | 9,9 | 13,7 |
| 7 | 248 | 1,72 | 2006 | 11,5 | 12,0 |

1 = 1, 4-Butandiol

2 = Zahlenmittel des Molekulargewichts

3 = Eindampfrückstand

4 = Produktivität

Ein Vergleich der erfindungsgemäßen Beispiele mit den Vergleichsbeispielen, bei denen vergleichbare Belastungen an THF gefahren werden, zeigt, dass mit dem erfindungsgemäßen Verfahren höhere Produktivitäten erreichbar sind.

**Patentansprüche**

1. Verfahren zur einstufigen Herstellung von Polytetrahydrofuran und/oder Tetrahydrofuran-Copolymeren eines mittleren Molekulargewichts von 650 bis 5000 Dalton durch die Polymerisation von Tetrahydrofuran an einem sauren Katalysator in Gegenwart mindestens eines Telogens und/oder Comonomers, **dadurch gekennzeichnet, dass** das Telogen und/oder Comonomer an mindestens zwei Zugabestellen in verschiedenen Segmenten eines durch geeignete Einbauten in Segmente unterteilen Polymerisationseinzelreaktors oder einer Kaskade aus mindestens zwei Polymerisationsreaktoren, bei der ein Segment ein Kessel- oder Rohrreaktor ist, zugegeben wird, wobei mindestens 5 Gew.-% des Telogens und/oder Comonomers ab der zweiten Zugabestelle zugegeben werden.

2. Verfahren nach Anspruch 1, **dadurch gekennzeichnet, dass** ein saurer heterogener Katalysator verwendet wird.

3. Verfahren nach einem der Ansprüche 1 oder 2, **dadurch gekennzeichnet, dass** an 2 bis 5 Zugabestellen in verschiedenen Segmenten des Polymerisationsreaktors oder einer Kaskade aus mindestens zwei Polymerisationsreaktoren Telogen und/oder Comonomer zugegeben wird.

4. Verfahren nach einem der Ansprüche 1 bis 3, **dadurch gekennzeichnet, dass** als Steuerungsgröße für die Zugabe des Telogens und/oder Comonomers in den einzelnen Segmenten das mittlere Molekulargewicht des PTHF oder THF-Copolymeren oder die Produktivität in diesen Segmenten dient.

5. Verfahren nach einem der Ansprüche 1 bis 4, **dadurch gekennzeichnet, dass** Polytetrahydrofuran aus Tetrahydrofuran und 1,4-Butandiol, Wasser und/oder Polytetrahydrofuran eines Molekulargewichts von 200 bis 700 Dalton als Telogen hergestellt wird.

**Claims**

1. A process for the single-stage preparation of polytetrahydrofuran and/or tetrahydrofuran copolymers having a mean molecular weight of from 650 to 5000 dalton by polymerization of tetrahydrofuran over an acid catalyst in the presence of at least one telogen and/or comonomer, wherein the telogen and/or comonomer is added at at least two addition points in different segments of a single polymerization reactor which is divided into segments by means of suitable internals or a cascade of at least two polymerization reactors in which a segment is a tank reactor or tube reactor, with at least 5% by weight of the telogen and/or comonomer being added after the second addition point.

2. The process according to claim 1, wherein a heterogeneous acid catalyst is used.

3. The process according to claim 1 or 2, wherein telogen and/or comonomer is added at from 2 to 5 addition points in different segments of the polymerization reactor or cascade of at least two polymerization reactors.

4. The process according to any of claims 1 to 3, wherein the control parameter employed for the addition of the telogen and/or comonomer in the individual segments is the mean molecular weight of the PTHF or THF copolymer or the productivity in these segments.

5. The process according to any of claims 1 to 4, wherein polytetrahydrofuran is prepared from tetrahydrofuran and 1,4-butanediol, water and/or polytetrahydrofuran having a molecular weight of from 200 to 700 dalton as telogen.

**Revendications**

1. Procédé de préparation en une étape de polytétrahydrofuranne et/ou de copolymères de tétrahydrofuranne d'un poids moléculaire moyen de 650 à 5000 Dalton par la polymérisation de tétrahydrofuranne sur un catalyseur acide en présence d'au moins un télogène et/ou comonomère, **caractérisé en ce que** le télogène et/ou comonomère est ajouté en au moins deux emplacements d'alimentation dans différents segments d'un réacteur individuel de polymérisation subdivisé en segments par des éléments encastrés appropriés ou d'une cascade d'au moins deux réacteurs de polymérisation, dans laquelle un segment est un réacteur en forme de cuve ou un réacteur tubulaire, au moins 5 % en poids du télogène et/ou comonomère étant ajoutés à partir du deuxième emplacement d'alimentation.

2. Procédé suivant la revendication 1, **caractérisé en ce qu'**on utilise un catalyseur hétérogène acide.

3. Procédé suivant l'une des revendications 1 et 2, **caractérisé en ce qu'**on ajoute du télogène et/ou comonomère en 2 à 5 emplacements d'alimentation dans différents segments du réacteur de polymérisation ou d'une cascade d'au moins deux réacteurs de polymérisation.

4. Procédé suivant l'une des revendications 1 à 3, **caractérisé en ce que** le poids moléculaire moyen du PTHF ou du copolymère de THF ou la productivité dans les différents segments sert de grandeur de contrôle pour l'alimentation du télogène et/ou comonomère dans ces segments.

5. Procédé suivant l'une des revendications 1 à 4, **caractérisé en ce que** du polytétrahydrofuranne est préparé à partir de tétrahydrofuranne et de 1,4 butanediol, d'eau et/ou de polytétrahydrofuranne d'un poids moléculaire de 200 à 700 Dalton comme télogène.